# EUROPÄISCHE PATENTSCHRIFT

(11) **EP 0 873 896 B1**
(45) Veröffentlichungstag und Bekanntmachung des Hinweises auf die Patenterteilung: **13.06.2001**
(21) Anmeldenummer: 98106344.9
(22) Anmeldetag: 07.04.1998
(51) Int. Cl.: B60J 7/12, B32B 5/22

(54) **Cabriolet-Fahrzeug mit einem Faltverdeck**
Convertible vehicle with foldable soft top
Véhicule convertible avec toit souple pliant

(30) Priorität: 25.04.1997 DE 29707433 U
(43) Veröffentlichungstag der Anmeldung: 28.10.1998
(73) Patentinhaber: Wilhelm Karmann GmbH, D-49084 Osnabrück (DE)
(72) Erfinder: Gerigk, Josef, 49124 Georgsmarienhütte (DE); Wittke, Winfried, 49205 Hasbergen (DE)
(74) Vertreter: Busse & Busse Patentanwälte

(56) Entgegenhaltungen:
- EP-A- 0 726 140
- US-A- 5 385 774

## Beschreibung

Die Erfindung betrifft ein Cabriolet-Fahrzeug mit einem Faltverdeck gemäß dem Oberbegriff des Anspruches 1, wie es aus der US-A-5 385 774 bekannt ist.

Bei einem bekannten Faltverdeck ist z.B. eine mittlere Polstermatte vorgesehen, die in mehrlagiger Ausbildung aus zumindest einer Gummihaar-Lage und einer Filz-Lage besteht und bei nachteilig hohem Bauteilgewicht insgesamt aufwendig zu verarbeiten ist.

Ein weiteres Faltverdeck ist aus der EP-A-0 726 140 bekannt.

Die Erfindung befaßt sich mit dem Problem, ein Faltverdeck zu schaffen, dessen in der Dachhaut befindliche Polstermatte konstruktiv einfach aufgebaut ist und bei verbesserter Schalldämmung eine einfache Montage ermöglicht.

Die Erfindung löst diese Aufgabe durch ein Faltverdeck mit den Merkmalen des Anspruches 1. Hinsichtlich wesentlicher weiterer Ausgestaltungsmerkmale wird auf die Ansprüche 2 bis 15 verwiesen.

Das erfindungsgemäße Faltverdeck stellt mit seiner Polstermatte aus der zumindest einen innenliegenden Vliesschicht und den beiden oberseitig bzw. unterseitig angeordneten Netzstruktur-Lagen ein einfach herstellbare und leicht zu verarbeitende Einzelteile aufweisendes Verbundteil dar, mit dessen Integration in die Dachhaut sich bei insgesamt vermindertem Herstellungs- und Montageaufwand auch eine Verbesserung der Schalldämmeigenschaften des Verdecks ergibt.

Die Polstermatte weist bei insgesamt geringem Flächengewicht im Bereich ihrer nach Art eines Hüllbezuges die innenliegenden Vliesschichten umfassenden Netzstruktur-Lagen eine ausreichende Rißfestigkeit, hohe Abriebfestigkeit sowie Kältebeständigkeit auf und durch eine Ausbildung der beiden äußeren Netzstruktur-Lagen als schwer entflammbare Teile wird dieses Verdeck auch hohen Sicherheitsanforderungen gerecht.

Die erfindungsgemäße Kombination der ein nur geringes Gewicht aufweisenden Vliesmatten mit den ebenfalls gewichtsreduzierend wirksamen Netzstruktur-Lagen ermöglicht eine problemlose und schnelle randseitige Verschweißung, so daß im Bereich dieser stabilen Verbindungszonen beispielsweise zusätzliche Lochungen für Anbauteile, wie Kabelteile o. dgl., möglich sind und mit der Schweißverbindung im Vergleich zu einer genähten Verbindung die Festigkeit insgesamt erhöht ist.

Weitere Einzelheiten und Vorteile der Erfindung ergeben sich aus der nachfolgenden Beschreibung und der Zeichnung, die ein Ausführungsbeispiel des erfindungsgemäßen Verdecks für ein Cabriolet-Fahrzeug schematisch veranschaulicht. In der Zeichnung zeigen:
- Fig. 1: eine perspektivische Ausschnittsdarstellung eines Verdeckaufbaus eines Cabriolet-Fahrzeugs bei Montage einer erfindungsgemäßen Dachhaut,
- Fig. 2: eine Ausschnittsdarstellung der eine mittlere Polstermatte aufweisenden Dachhaut des Verdeckaufbaus gemäß einer Linie II - II in Fig. 1,
- Fig. 3: eine Ausschnittsdarstellung der Dachhaut gemäß einer Linie III - III in Fig. 4,
- Fig. 4: eine Perspektivdarstellung des Verdeckaufbaus mit einem Verdeckspriegel ähnlich Fig. 1,
- Fig. 5: eine Ausschnittsdarstellung der Dachhaut im Bereich des Verdeckspriegels gemäß einer Linie V - V in Fig. 4,
- Fig. 6: eine Ausschnittsdarstellung der Dachhaut im Bereich einer Schweißnaht gemäß einer Linie VI - VI in Fig. 4, und
- Fig. 7: eine Ausschnittsdarstellung ähnlich Fig. 5 mit einem in die Polstermatte integrierten Verdeckspriegel.

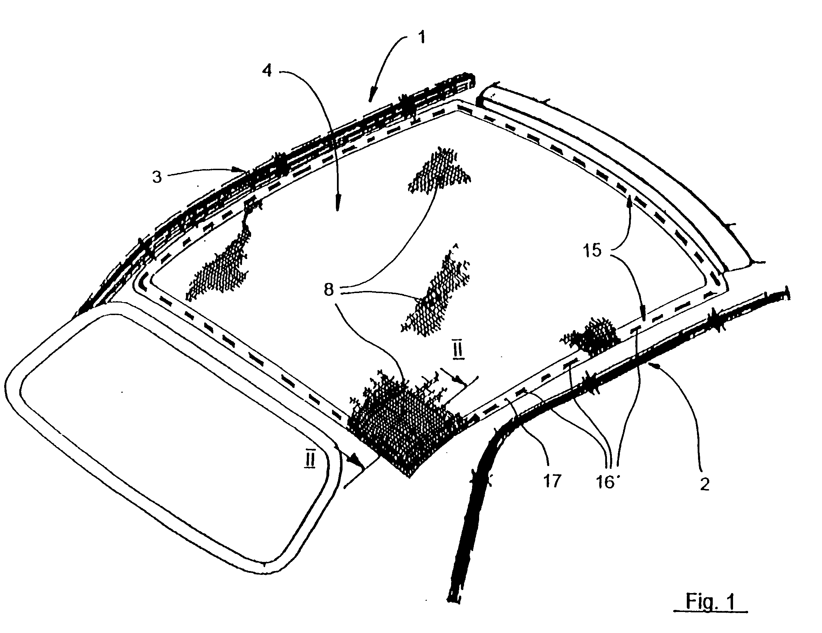

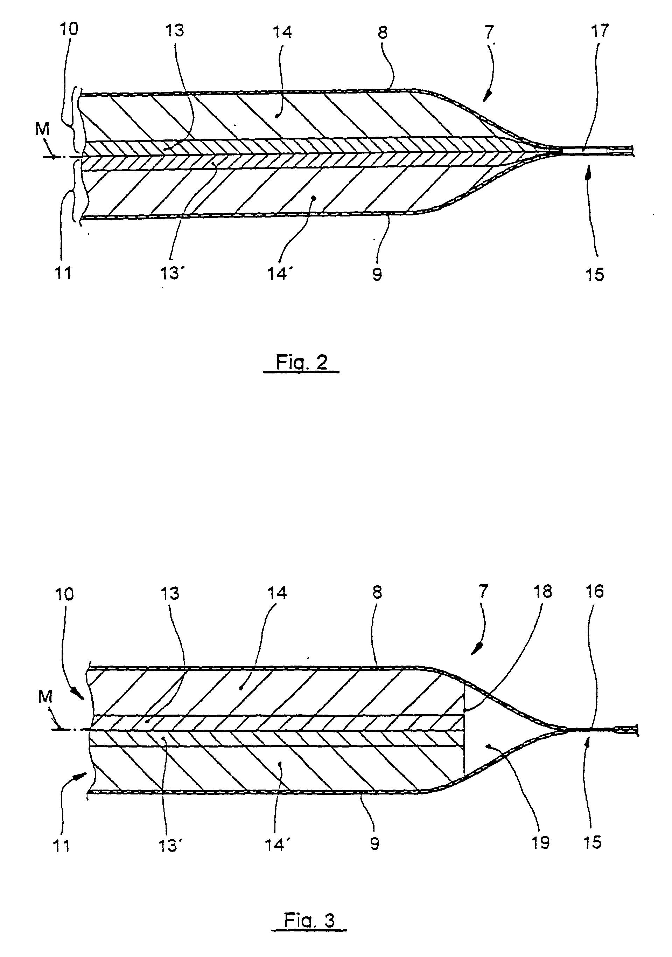

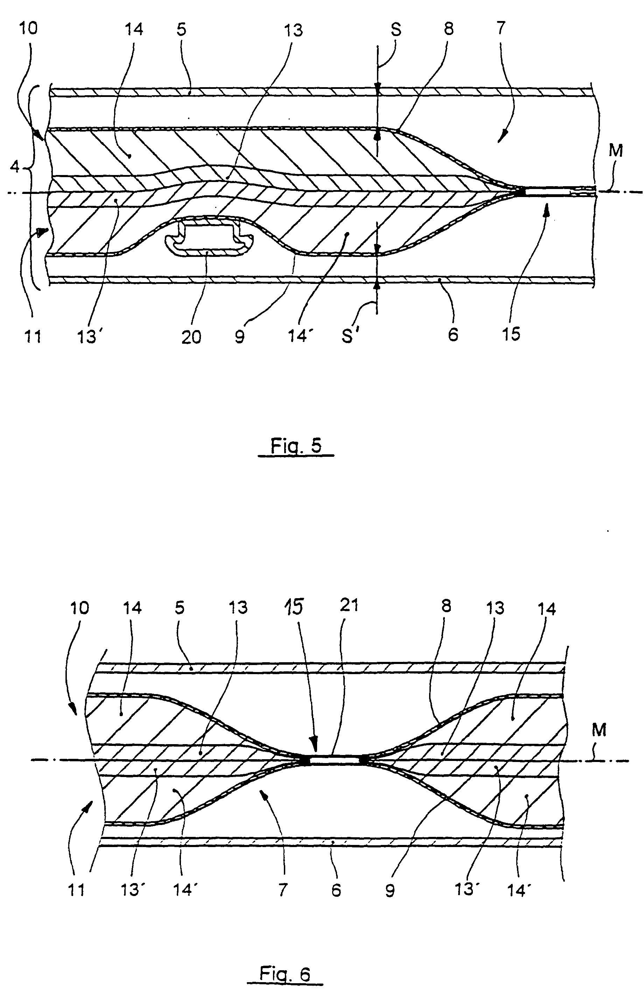

In Fig. 1 ist in einer perspektivischen Prinzipdarstellung ein Verdeckaufbau für ein nicht näher dargestelltes Cabriolet-Fahrzeug veranschaulicht, dessen insgesamt mit 1 bezeichnetes Faltverdeck mit einer zwischen randseitigen Gestängeschenkeln 2, 3 verlaufenden Dachhaut 4 (Komplettaufbau: Fig. 5) versehen ist. Diese Dachhaut 4 weist dabei in ihrem mittleren Bereich zwischen einer oberen Deckschicht 5 und einem unteren zum Fahrzeuginnenraum gerichteten Verdeckhimmel 6 eine mittlere Polstermatte 7 (Fig. 2, Fig. 3) auf. Bekannte Polstermatten 7 sind in mehrlagiger Ausbildung beispielsweise aus miteinander vernähten Gummihaar- und/oder Filz-Lagen gebildet, die gemeinsam zwischen zwei eine weitgehend dichte Fläche bildenden PVC-Folienlagen eingebracht sind (nicht dargestellt).

Bei der erfindungsgemäßen Dachhaut 4 ist eine Polstermatte 7 vorgesehen, die aus einer oberen und einer unteren Netzstruktur-Lage 8 und 9 sowie zumindest einer zwischen diesen befindlichen Vliesmatte 10 bzw. 11 gebildet ist.

In den dargestellten Ausführungsformen gemäß Fig. 2, 3 und 5 bis 7 sind zwischen den beiden Netzstruktur-Lagen 8 und 9 je zwei Vliesmatten 10 und 11 vorgesehen, die in vorteilhafter Ausführung aus einem Polyester-Vlies oder Schaumstoff mit einem Flächengewicht von beispielsweise 350 g/m² bestehen. Bei Inkaufnahme höheren Gewichts wäre es auch denkbar, die Netzstruktur-Lagen 8 und 9 anstatt mit den Vlies- oder Schaummatten mit den an sich bekannten Gummihaar- und/oder Filz-Lagen zu kombinieren.

Die beiden Vliesmatten 10 und 11 weisen in ihrem Querschnitt jeweilige Zonen 13 und 14 bzw. 13' und 14' auf, in denen die Fasern in unterschiedlicher Dichte verteilt sind. Die verdichteten Zonen 13 und 13'der jeweiligen Lage liegen in Einbaulage im Bereich einer Mittelebene M aneinander, so daß die faserverdichteten Zonen 13, 13' einen mittleren Bereich mit progressiven Feder-Eigenschaften definieren und sich der lockere Faserverbund der Zonen 14 und 14' jeweils zu den Netzstruktur-Lagen 8 bzw. 9 nach außen hin erstreckt. Mit diesem Querschnittsaufbau in der Polstermatte 7 sind insbesondere die schalldämmenden Eigenschaften der Dachhaut 4 verbessert.

Die beiden Netzstruktur-Lagen 8 und 9 bestehen in erfindungsgemäßer Ausbildung aus einem Kunststoffgarn, insbesondere Polyestergarn, wobei die jeweiligen Einzelfäden in einem sichtbar große Maschen bildenden Abstand gewebt sind und damit ein weitgehend ungehinderter Luftaustritt aus der Polstermatte 7 möglich ist.

Dieser gewebte Polyestergarn kann in seiner jeweiligen Netzstruktur mit einer in der Größe variabel ausgeführten Maschenweite versehen sein und vor der weiteren Verarbeitung zu der Polstermatte 7 wird die gewebte Netzstruktur insbesondere mit einer Beschichtung, beispielsweise aus Weich-PVC, versehen. Diese beschichteten Netzstruktur-Lagen 8 und 9 weisen bei Anlage an der Deckschicht 5 bzw. dem Verdeckhimmel 6 geringe Reibwerte auf, sind hinreichend beständig bei Temperaturwechsel, nicht brennbar und überaus rißfest.

Bei der Verarbeitung dieses Netzstrukturgewebes zur Polstermatte 7 werden die zwei Vliesmatten 10 und 11 mit den beiden Netzstruktur-Lagen 8 und 9 abgedeckt und danach in einem randseitigen Verbindungsbereich 15 die beiden Lagen 8 und 9 so verbunden, daß die innenliegenden Vliesmatten 10 und 11 eingehüllt sind und den beiden Lagen 8, 9 eine Flächenpressung vermittelt ist, derart, daß eine kompakte Matte gebildet ist.

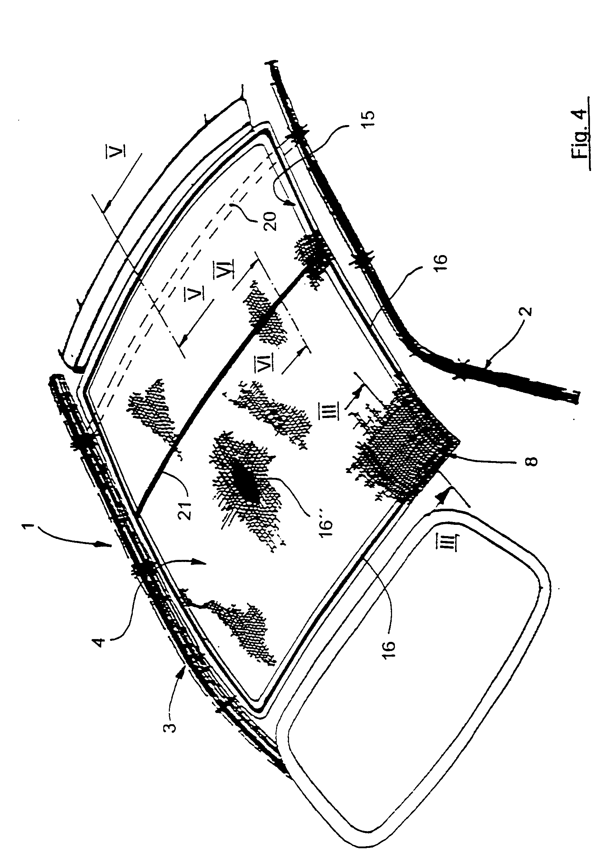

In zweckmäßiger Ausführung ist der randseitige Verbindungsbereich 15 von einer umlaufenden Schweißnaht 16 (Fig. 4) oder einer jeweilige im Abstand angeordnete Unterbrechungsbereiche 17 aufweisenden Punktschweißung 16' (Fig. 1) gebildet.

Bei der Ausführungsform der Verbindungsbereichs 15 gemäß Fig. 2 sind die beiden inneren Vlies-Lagen 10, 11 bis in den Bereich der Punktschweißung 16' bzw. der Unterbrechung 17 verlängert, so daß die jeweils randseitig eingeschnürten Lagen 10 und 11 der Polstermatte 7 eine vollständige Ausfüllung des Innenraums zwischen den Lagen 8 und 9 bewirken. Dabei können Teilbereiche der Vliesmatten 10 und 11 von der Schweißnaht 16, 16' erfaßt sein.

Die in der Ausführung gemäß Fig. 3 zwischen den unmittelbar randseitig verschweißten Netzstruktur-Lagen 8 und 9 befindlichen Vlies-Lagen 10 und 11 sind mit einem konturbildenden Schnittrand 18 versehen, so daß bei entsprechender Positionierung der Vliesmatten in der Einbaulage zum Verbindungsbereich 15 hin ein Hohlraum 19 gebildet ist.

Die Darstellung der Polstermatte 7 im Bereich eines Verdeckspriegels 20 gemäß Fig. 5 verdeutlicht die weitgehend flexible Abstützung in diesem Bereich, wobei die Polstermatte 7 den Verdeckspriegel 20 vorteilhaft derart übergreift, daß sowohl ein Bewegungsspalt S zwischen Deckschicht 5 und der oberen Netzstruktur-Lage 8 als auch ein Bewegungsspalt S' zwischen der unteren Netzstruktur-Lage 9 und dem Verdeckhimmel 6 verbleibt und damit bei der Verstellung des Faltverdecks 1 die Dachhaut 4 mit im wesentlichen unbeeinflußter Bewegungsfreiheit gefaltet bzw. gespannt werden kann.

Die Schnittdarstellung gemäß Fig. 6 verdeutlicht in Zusammenschau mit Fig. 4 die vorteilhafte Ausbildung der Dachhaut 4 mit einer als Sollknickbereich bei der Faltbewegung des Verdecks wirksamen Schweißnaht 21, die sich in Querrichtung über die gesamte Verdeckbreite erstreckt und als eine HF-Schweißung vorgesehen ist. Zusätzlich kann die Polstermatte 7 zu einer Erhöhung der Verpressung der Vliesmatten 10, 11 zwischen den beiden Netzstruktur-Lagen 8 und 9 mit Schweißnähten 16'' (Fig. 4) versehen sein, die als jeweilige ovale oder runde Punkt-Schweißbereiche über die Fläche der Dachhaut 4 verteilt angeordnet sind und beispielsweise ein Punktraster bilden.

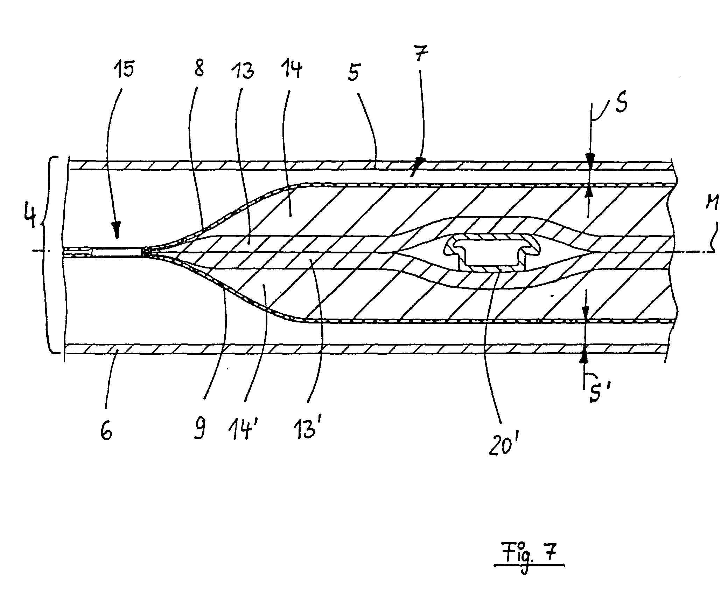

Fig. 7 zeigt eine weitere Einbauvariante der Polstermatte 7, wobei diese den Verdeckspriegel 20' zwischen den beiden Vliesmatten 10 und 11 im Bereich der verdichteten Zonen 13, 13' so aufnimmt, daß der Verdeckspriegel 20' auch zum Verdeckhimmel 6 hin von einer Dämpfungs- und Schutzlage übergriffen ist.

## Patentansprüche

1. Cabriolet-Fahrzeug mit einem Faltverdeck, dessen Dachhaut (4) mit einer oberen Deckschicht (5), einer mittleren Polstermatte (7) und einem unteren Verdeckhimmel (6) versehen ist, **dadurch gekennzeichnet,** daß die Polstermatte (7) der Dachhaut (4) aus einer oberen und einer unteren Netzstruktur-Lage (8, 9) und zumindest einer zwischen diesen befindlichen Vliesmatte (10, 11) gebildet ist.

2. Faltverdeck nach Anspruch 1, dadurch gekennzeichnet, daß die Deckschicht (5) auf der oberen Netzstruktur-Lage (8) straff aufliegt.

3. Faltverdeck nach Anspruch 1, dadurch gekennzeichnet, daß zwischen oberer Netzstruktur-Lage (8) und Deckschicht (5) sowie zwischen Verdeckhimmel (6) und unterer Netzstruktur-Lage (9) ein jeweiliger Freiraum (S, S') belassen ist.

4. Faltverdeck nach einem der Ansprüche 1 bis 3, dadurch gekennzeichnet, daß zwischen den beiden Netzstruktur-Lagen (8, 9) mehrere Vliesmatten (10, 11) vorgesehen sind.

5. Faltverdeck nach einem der Ansprüche 1 bis 4, dadurch gekennzeichnet, daß jede Vliesmatte (10, 11) in ihrem Querschnitt mit Zonen (13, 14; 13', 14') unterschiedlich dicht verteilter Fasern ausgebildet ist.

6. Faltverdeck nach einem der Ansprüche 1 bis 5, dadurch gekennzeichnet, daß die Polstermatte (7) zwei Vliesmatten (10, 11) aufweist, die in Einbaulage außenseitig von der jeweiligen Netzstruktur-Lage (8, 9) überspannt sind und innenseitig im Bereich ihrer jeweils verdichtete Fasern aufweisenden Zone (13, 13') aneinanderliegen.

7. Faltverdeck nach einem der Ansprüche 1 bis 6, dadurch gekennzeichnet, daß die Netzstruktur-Lage (8, 9) aus einem gewebten Kunststoffgarn gebildet ist.

8. Faltverdeck nach Anspruch 7, dadurch gekennzeichnet, daß als Kunststoffgarn Polyestergarn vorgesehen ist.

9. Faltverdeck nach Anspruch 7 oder 8, dadurch gekennzeichnet, daß die aus gewebtem Polyestergarn gebildete Netzstruktur (8, 9) mit einer Weich-PVC-Beschichtung versehen ist.

10. Faltverdeck nach einem der Ansprüche 1 bis 9, dadurch gekennzeichnet, daß die beiden Netzstruktur-Lagen (8, 9) zumindest einen den beiden Vliesmatten (10, 11) eine Flächenpressung vermittelnden Verbindungsbereich (15) aufweisen.

11. Faltverdeck nach Anspruch 10, dadurch gekennzeichnet, daß der Verbindungsbereich (15) von einer im Randbereich der Dachhaut (4) umlaufenden Schweißnaht (16) gebildet ist.

12. Faltverdeck nach Anspruch 10, dadurch gekennzeichnet, daß der Verbindungsbereich (15) von einer oder mehreren Punktschweißungen (16', 16'') gebildet ist.

13. Faltverdeck nach einem der Ansprüche 10 bis 12, dadurch gekennzeichnet, daß einer der Verbindungsbereiche (15) als ein in Querrichtung des Verdecks (1) verlaufender Sollknickbereich (21) der Dachhaut (4) vorgesehen ist.

14. Faltverdeck nach einem der Ansprüche 1 bis 13, dadurch gekennzeichnet, daß die jeweilige Vliesmatte (10, 11) aus Kunststoffasern, Schaumstoff, Filzmaterial oder Gummihaar besteht.

15. Faltverdeck nach einem der Ansprüche 1 bis 14, dadurch gekennzeichnet, daß in der Polstermatte (7) jeweils mehrere Vliesmatten (10, 11) aus gleichem oder unterschiedlichem Material vorgesehen sind.

## Claims

1. A cabriolet vehicle with a folding top, the roof skin (4) of which is provided with an upper covering layer (5), a middle padding mat (7) and a lower head lining (6), characterised in that the padding mat (7) of the roof skin (4) is constituted by an upper and a lower layer (8, 9) of a network structure and at least one fleece mat (10, 11) disposed between them.

2. A folding top according to claim 1, characterised in that the top layer (5) lies taut on the upper network structure layer (8).

3. A folding top according to claim 1, characterised in that between the upper network structure layer (8) and the covering layer (5) as well as between head lining (6) and the lower network structure layer (9) there is a clear space (S, S').

4. A folding top according to one of claims 1 to 3, characterised in that a plurality of fleece mats (10, 11) are provided between the two network structure layers (8, 9).

5. A folding top according to one of claims 1 to 4, characterised in that each fleece mat (10, 11) is in its cross-section constructed with zones (13, 14; 13', 14') of fibres distributed in varying densities.

6. A folding top according to one of claims 1 to 5, characterised in that the padding mat (7) comprises two fleece mats (10, 11) which, in the installed position, are spanned on the outside by the relevant network structure layer (8, 9) while on the inside they rest on each other in the region of the zone (13, 13') which comprises the respectively condensed fibres.

7. A folding top according to one of claims 1 to 6, characterised in that the network structure layer (8, 9) is constituted by a woven synthetic plastics yarn.

8. A folding top according to claim 7, characterised in that polyester yarn is provided as the synthetic plastics yarn.

9. A folding top according to claim 7 or 8, characterised in that the network structure (8, 9) formed from woven polyester yarn is provided with a soft PVC coating.

10. A folding top according to one of claims 1 to 9, characterised in that the two network structure layers (8, 9) have at least one connecting zone (15) which imparts a surface pressure to the two fleece mats (10, 11).

11. A folding top according to claim 10, characterised in that the connecting area (15) is constituted by a welded seam (16) encircling the marginal area of the roof skin (4).

12. A folding top according to claim 10, characterised in that the connecting area (15) is constituted by one or a plurality of spot welds (16', 16").

13. A folding top according to one of claims 10 to 12, characterised in that one of the connecting areas (15) is provided as a preselected bending zone (21) of the roof skin (4) which extends in the transverse direction of the top (1).

14. A folding top according to one of claims 1 to 13, characterised in that the relevant fleece mat (10, 11) consists of synthetic plastics fibres, foamed material, felt material or rubberised hair.

15. A folding top according to one of claims 1 to 13, characterised in that in each case a plurality of fleece mats (10, 11) of identical or different material are provided in the padding mat (7).

## Revendications

1. Véhicule convertible de type cabriolet avec toit souple pliant, dont la peau de toit (4) est munie d'une couche de couverture (5) située en haut, d'une garniture intermédiaire de rembourrage (7) et d'un ciel de toit (6) situé en bas,
caractérisé en ce que
la garniture de rembourrage (7) de la peau de toit (4) est constituée par une couche supérieure et une couche inférieure (8, 9) à structure réticulée et par au moins un matelas en non-tissé (10, 11) situé entre ces couches.

2. Toit souple pliant selon la revendication 1,
caractérisé en ce que
la couche de couverture (5) repose tendue sur la couche supérieure à structure réticulée (8).

3. Toit souple pliant selon la revendication 1,
caractérisé en ce qu'
entre la couche supérieure (8) à structure réticulée et la couche de couverture (5), ainsi qu'entre le ciel de toit (6) et la couche inférieure (9) à structure réticulée, subsiste un espace libre (S, S').

4. Toit souple pliant selon l'une quelconque des revendications 1 à 3,
caractérisé en ce qu'
entre les deux couches (8, 9) à structure réticulée, il est prévu plusieurs matelas en non-tissé (10, 11).

5. Toit souple pliant selon l'une quelconque des revendications 1 à 4,
caractérisé en ce que chaque matelas en non-tissé (10, 11) présente, en section, des zones (13, 14 ; 13', 14') qui diffèrent par la densité de répartition des fibres qui s'y trouvent.

6. Toit souple pliant selon l'une quelconque des revendications 1 à 5,
caractérisé en ce que
la garniture de rembourrage (7) comprend deux matelas en non-tissé (10, 11) qui, en position de montage, subissent vers l'extérieur la tension exercée par la couche à structure réticulée (8, 9) correspondante, tandis que vers l'intérieur, ils sont appliqués l'un sur l'autre par leurs zones respectives (13, 13') faites de fibres tassées.

7. Toit souple pliant selon l'une quelconque des revendications 1 à 6,
caractérisé en ce que
chaque couche (8, 9) à structure réticulée est constituée de fils de plastique tissés.

8. Toit souple pliant selon la revendication 7,
caractérisé en ce que
les fils plastiques sont des fils de polyester.

9. Toit souple pliant selon l'une quelconque des revendications 7 ou 8,
caractérisé en ce que la structure réticulée (8, 9) faite de fils tissés en matière plastique est garnie d'un revêtement en PVC doux.

10. Toit souple pliant selon l'une quelconque des revendications 1 à 9,
caractérisé en ce que
les deux couches à structure réticulée (8, 9) présentent au moins une zone de liaison (15) avec compression superficielle l'un sur l'autre des deux matelas en non-tissé (10, 11).

11. Toit souple pliant selon la revendication 10,
caractérisé en ce que la zone de liaison (15) est constituée par un cordon soudé (16) disposé périphériquement dans la zone marginale de la peau de toit (4).

12. Toit souple pliant selon la revendication 10,
caractérisé en ce que
la zone de liaison (15) est constituée d'une ou plusieurs soudures par points (16', 16'').

13. Toit souple pliant selon l'une quelconque des revendications 10 à 12,
caractérisé en ce qu' une des zones de liaison (15) est prévue sous la forme d'une zone de pliage imposé (21) de la peau de toit (4), transversalement au toit pliant (1).

14. Toit souple pliant selon l'une quelconque des revendications 1 à 13,
caractérisé en ce que chaque matelas en non-tissé (10, 11) est composé de fibres synthétiques, d'une mousse, d'un matériau à base de feutre ou de fils de caoutchouc.

15. Toit souple pliant selon l'une quelconque des revendications 1 à 14,
caractérisé en ce que
la garniture de rembourrage (7) comporte plusieurs matelas en non-tissé (10, 11), faits du même matériau ou de matériaux différents.
